# EUROPÄISCHE PATENTSCHRIFT

(11) **EP 0 713 887 B1**
(45) Veröffentlichungstag und Bekanntmachung des Hinweises auf die Patenterteilung: **17.03.1999**
(21) Anmeldenummer: 95118128.8
(22) Anmeldetag: 17.11.1995
(51) Int. Cl.: C08F 210/02

(54) **Verfahren zur Herstellung von Copolymerisaten des Ethylens mit Alkencarbonsäuren**
Process for the production of ethylene-alkene carboxylic acid copolymers
Procédé de préparation de copolymères de l'éthylène avec d'acides carboxyliques

(30) Priorität: 24.11.1994 DE 4441822
(43) Veröffentlichungstag der Anmeldung: 29.05.1996
(73) Patentinhaber: BASF AKTIENGESELLSCHAFT, 67056 Ludwigshafen (DE)
(72) Erfinder: Deckers, Andreas, Dr., D-55234 Flomborn (DE); Littmann, Dieter, Dr., D-68167 Mannheim (DE); Klimesch, Roger, Dr., D-64665 Alsbach-Hähnlein (DE)

(56) Entgegenhaltungen:
- EP-A- 0 318 058
- EP-A- 0 449 092
- EP-A- 0 573 868
- GB-A- 1 503 397
- US-A- 4 351 931

## Beschreibung

Die vorliegende Erfindung betrifft ein Verfahren zur Herstellung von Copolymerisaten des Ethylens enthaltend
a) 94 bis 99,5 mol-% Ethylen und
b) 0,5 bis 6 mol-% einer C₃- bis C₆-Alkencarbonsäure
durch radikalisch initiierte Hochdruckpolymerisation der Monomeren im Rohrreaktor.

Weiterhin betrifft die vorliegende Erfindung die Copolymerisate des Ethylens, sowie die Verwendung der Copolymerisate des Ethylens gemäß den Ansprüchen 1 bis 4 zur Herstellung von Haftvermittlern, Folien, Fasern oder Formkörpern und die hierbei erhältlichen Haftvermittler, Folien, Fasern und Formkörper.

Copolymerisate des Ethylens mit Alkencarbonsäuren dienen bekanntlich zur Herstellung von Folien und Formkörpern aller Art. Derartige Copolymerisate werden außerdem häufig als Haftvermittler zwischen polaren und unpolaren Materialien eingesetzt.

Die Herstellung von Copolymerisaten des Ethylens mit Alkencarbonsäuren ist in der US 4,351,931 und der EP-A 0 017 229 beschrieben worden. Die dort beschriebenen Copolymerisationsreaktionen wurden in Hochdruck-Rührautoklaven durchgeführt.

Gerade aber relativ aggressive Comonomeren wie beispielsweise Alkencarbonsäuren können bei diesem Polymerisationsverfahren, beispielsweise an der Rührereinheit, zu Korrosionsproblemen führen. Dies macht das Rührautoklavenverfahren technisch und wirtschaftlich nachteilig.

Der vorliegenden Erfindung lag daher die Aufgabe zugrunde, ein Verfahren zur Herstellung von Copolymerisaten aus Ethylen und Alkencarbonsäuren bereitzustellen, welches die genannten Nachteile nicht aufweist.

Demgemäß wurde ein Verfahren zur Herstellung von Copolymerisaten des Ethylens enthaltend
a) 94 bis 99,5 mol-% Ethylen und
b) 0,5 bis 6 mol-% einer C₃- bis C₆-Alkencarbonsäure
durch radikalisch initiierte Hochdruckpolymerisation der Monomeren im Rohrreaktor gefunden, wobei man das Monomerengemisch vor der Zugabe des Initiators nicht über 100°C erwärmt und das Maximum der Polymerisationstemperatur 260°C nicht überschreitet.

Die grundlegenden Merkmale des Hochdruckpolymerisationsverfahrens zur Herstellung von Ethylenpolymeren in Rohrreaktoren wurde bereits in Ullmann's Encyclopedia of Industrial Chemistry, 5th Edition, Vol. A21 (1992), S. 506 bis 509 beschrieben.

Die erfindungsgemäße Copolymerisation von Ethylen mit Alkencarbonsäuren findet im allgemeinen in rohrförmigen Polymerisationsreaktoren (Rohrreaktor) statt, deren Längenausdehnung das 1000-fache oder mehr, vorzugsweise das 3000-fache oder mehr und insbesondere das 5000- bis 50000-fache des Rohrinnendurchmessers beträgt.

Nach dem erfindungsgemäßen Verfahren erfolgt die Polymerisation der Monomeren bei einem Druck im Bereich von 30.000 bis 500.000 kPa, vorzugsweise im Bereich von 100.000 bis 400.000 kPa und insbesondere im Bereich von 150.000 bis 350.000 kPa.

Das Monomerengemisch wird vor der Polymerisationszone auf eine Temperatur von weniger als 100°C, vorzugsweise auf eine Temperatur im Bereich von 50 bis 100°C und insbesondere 70 bis 100°C erwärmt.

Die Temperaturen in der Polymerisationszone liegen unterhalb von 260°C, vorzugsweise im Bereich von 50 bis 260°C und insbesondere im Bereich von 100 bis 240°C. Aus Gründen der Produktqualität darf die Polymerisationstemperatur von 260°C nicht überschritten werden.

Die Polymerisationstemperatur wird im allgemeinen durch die Dosierung der radikalischen Polymerisationsinitiatoren geregelt.

Als Comonomere des erfindungsgemäßen Verfahrens kommen ein- oder auch mehrbasige Alkencarbonsäuren mit 3 bis 6 Kohlenstoffatomen in Betracht. Solche C₃- bis C₆-Alkencarbonsäuren sind beispielsweise Acrylsäure, Methacrylsäure, Crotonsäure, Isocrotonsäure, Vinylessigsäure, Maleinsäure und Fumarsäure. Vorzugsweise verwendet man Acrylsäure oder Methacrylsäure als Comonomere und insbesondere Acrylsäure.

Die Copolymerisation erfolgt im allgemeinen in Gegenwart von radikalischen Initiatoren, die bereits in EP-A 0 017 229 beschrieben wurden. An die radikalischen Initiatoren des erfindungsgemäßen Verfahrens werden keine besonderen Anforderungen gestellt, außer daß sie bereits im Temperaturbereich von ca. 50 bis ca. 100°C in Radikale zerfallen und/oder durch Reaktion mit anderen Molekülen des Reaktionsgemisches Radikale generieren können.

In Betracht kommen hierfür beispielsweise Peroxide, wie tert.-Butylperpivalat, Di-tert.-butylperoxid, tert.-Butylhydroperoxid, tert.-Butylperbenzoat, Dilaurylperoxid, tert.-Butylperisononanoat und 1,1-Di-tert.-butylperoxicyclohexan. Vorzugsweise verwendet man tert.-Butylperpivalat, tert.-Butylperisononanoat und 1,1-Di-tert-butylperoxicyclohexan.

Die radikalischen Initiatoren werden in einer Menge von 1 bis 10000 mol-ppm, vorzugsweise 10 bis 1000 mol-ppm, bezogen auf die Menge (in mol) der Monomeren, dem Polymerisationsgemisch zugesetzt.

Selbstverständlich können auch Mischungen der radikalischen Initiatoren in beliebigem Mischungsverhältnis der Komponenten verwendet werden.

Es hat sich als vorteilhaft erwiesen, die radikalischen Initiatoren in Lösungsmitteln zu lösen.

Geeignete Lösungsmittel sind aliphatische oder aromatische Kohlenwasserstoffe. Als Beispiele seien genannt Hexan, Heptan, Octan, Nonan, Decan, Isodecan, Toluol und Ethylbenzol.
Die Konzentration des radikalischen Initiators bezogen auf die Lösung liegt im Bereich von 1 bis 50 Gew.-%, vorzugsweise im Bereich von 5 bis 30 Gew.-%.

Die Regelung des Molekulargewichts der Copolymeren geschieht mit den hierzu in der Hochdruckpolymerisationstechnik üblicherweise verwendeten Reglern. In Betracht kommen Kohlenwasserstoffe, wie beispielsweise Propan, Propen, Buten und/oder organische Carbonylverbindungen wie beispielsweise Aceton, Ethylmethylketon und Propionaldehyd. Als besonders vorteilhaft haben sich Propen, Buten und Propionaldehyd als Molekulargewichtsregler erwiesen.

Die erfindungsgemäßen Polymerisate haben im allgemeinen Schmelzindices, gemessen bei 190°C und 2,16 kg Auflagegewicht nach DIN 53 735, im Bereich von 0,1 bis 100 g/10 min, vorzugsweise von 2 bis 20 g/10 min.

Der C₃- bis C₆-Alkensäuregehalt der erfindungsgemäßen Ethylen Copolymerisate, bestimmt durch Titration mit Kalilauge, beträgt 0,5 bis 6 mol-%, vorzugsweise 3 bis 6 mol-%.

Die nach dem beschriebenen Verfahren hergestellten Ethylen/Alkencarbonsäure-Copolymerisate weisen eine hohe Haftfestigkeit auf Metallen, bestimmt nach der in EP-B 0 157 107 beschriebenen Methode, auf. Desweiteren weisen die mit den erfindungsgemäßen Copolymerisaten des Ethylens hergestellten Folien eine geringe Anzahl von Stippen, bestimmt durch visuelle Methode, auf.

### Beispiele

Die Copolymerisation des Ethylens wurde in einem Hochdruck-Rohrreaktor, der ein Längen/Durchmesser-Verhältnis von 10000 aufweist, durchgeführt.

Die Dosierung der Acrylsäure und des Reglers (Propionaldehyd) in den Ethylenstrom erfolgte zwischen Vorverdichter und Nachverdichter. Nachdem das Reaktionsgemisch auf 230.000 kPa verdichtet wurde, wurde es auf 80°C erwärmt und anschließend in den Polymerisationsreaktor geleitet. Am Eingang des S-Reaktors erfolgte die Zugabe eines Gemisches aus 0,5 mol/l tert.-Butylperpivalat und 1 mol/l 1,1-Di-tert.-butylperoxicyclohexan, gelöst in Isodecan. Die Dosierung des Initiatorgemisches wurde so gewählt, daß das Temperaturmaximum in der Polymerisationszone den Wert von 240°C nicht überschritt. Nach einer 2-stufigen Entspannung des Reaktionsgemisches wurde das Ethylen/Alkencarbonsäurecopolymerisat mit Hilfe eines Extruders ausgetragen und nicht-umgesetztes Ethylen in den Prozeß zurückgeführt.

Die Eigenschaften der Polymeren sind der Tabelle zu entnehmen.

**Tabelle**

| Ethylen/Acrylsäure-Copolymere | | | |
|---|---|---|---|
| Beispiel Nr. | Acrylsäuregehalt des Polymeren [mol-%] | MFI [g/10 min] | Haftfestigkeit auf Al [N/10 mm] |
| 1 | 3,4 | 8,8 | 41 |
| 2 | 4,2 | 7,2 | 46 |
| 3 | 5,1 | 14,7 | 52 |

### Vergleichsbeispiel

Das Vergleichsbeispiel wurde nach dem in US 4,351,931 beschriebenen Verfahren durchgeführt.

Man erhielt ein Ethylen/Acrylsäurecopolymerisat mit einem Acrylsäuregehalt von 4,6 mol-%, einem MFI-Wert von 10,1 g/10 min und einer geringeren Haftfestigkeit auf Aluminium von 19 N/10 mm.

## Patentansprüche

1. Verfahren zur Herstellung von Copolymerisaten des Ethylens enthaltend
a) 94 bis 99,5 mol-% Ethylen und
b) 0,5 bis 6 mol-% einer C₃- bis C₆-Alkencarbonsäure
durch radikalisch initiierte Hochdruckpolymerisation der Monomeren im Rohrreaktor bei einem Druck im Bereich von 30.000 bis 500.000 KPa, dadurch gekennzeichnet, daß man das Monomerengemisch vor der Zugabe des Initiators nicht über 100 °C erwärmt und das Maximum der Polymerisationstemperatur 260 °C nicht überschreitet.

2. Verfahren gemäß Anspruch 1, dadurch gekennzeichnet, daß man das Monomerengemisch vor der Zugabe des Initiators auf eine Temperatur im Bereich von 50 bis 100 °C erwärmt.

3. Verfahren gemäß der Ansprüche 1 bis 2, dadurch gekennzeichnet, daß das Maximum der Polymerisationstemperatur im Bereich von 100 bis 260 °C liegt.

4. Copolymerisate des Ethylens, erhältlich nach dem Verfahren gemäß den Ansprüchen 1 bis 3.

5. Verwendung der Copolymerisate des Ethylens gemäß den Ansprüchen 1 bis 4 als Haftvermittler, Folien, Fasern oder Formkörper.

6. Haftvermittler, Fasern, Folien und Formkörper, erhältlich aus den gemäß den Ansprüchen 1 bis 4 erhaltenen Copolymerisaten des Ethylens als wesentliche Komponente.

## Claims

1. A process for the preparation of copolymers of ethylene comprising
a) from 94 to 99.5 mol% of ethylene and
b) from 0.5 to 6 mol% of a C₃- to C₆-alkenecarboxylic acid
by free-radical-initiated high-pressure polymerization of the monomers in a tubular reactor at a pressure in the range from 30,000 to 500,000 kPa, wherein the monomer mixture is warmed to a maximum of 100°C before addition of the initiator, and the polymerization temperature does not exceed a maximum of 260°C.

2. A process as claimed in claim 1, wherein the monomer mixture is warmed to from 50 to 100°C before addition of the initiator.

3. A process as claimed in claim 1 or 2, wherein the maximum polymerization temperature is in the range from 100 to 260°C.

4. A copolymer of ethylene obtainable by a process as claimed in any of claims 1 to 3.

5. The use of a copolymer of ethylene as claimed in any of claims 1 to 4 as an adhesion promoter, film, fiber or molding.

6. An adhesion promoter, fiber, film or molding obtainable from a copolymer of ethylene obtained as claimed in any of claims 1 to 4 as essential component.

## Revendications

1. Procédé pour la préparation de copolymères d'éthylène contenant
a) 94 à 99,5 % en moles d'éthylène et
b) 0,5 à 6 % en moles d'acide alcènecarboxylique en C₃ à C₆
par polymérisation des monomères, sous haute pression, initialisée par voie radicalaire en réacteur tubulaire sous une pression comprise entre 30.000 et 500.000 kPa, caractérisé par le fait qu'on chauffe le mélange de monomères avant l'addition de l'initiateur à une température ne dépassant pas 100°C et que le maximum de la température de polymérisation ne dépasse pas 260°C.

2. Procédé selon la revendication 1, caractérisé par le fait qu'on chauffe le mélange de monomères avant l'addition de l'initiateur à une température comprise entre 50 et 100°C.

3. Procédé selon les revendications 1 à 2, caractérisé par le fait que le maximum de la température de polymérisation se situe entre 100 et 260°C.

4. Copolymères d'éthylène, pouvant être obtenus par le procédé selon les revendications 1 à 3.

5. Utilisation des copolymères d'éthylène selon les revendications 1 à 4 comme agents adhésifs, feuilles, fibres ou pièces moulées.

6. Agents adhésifs, fibres, feuilles et pièces moulées, pouvant être obtenus à partir des copolymères d'éthylène obtenus selon les revendications 1 à 4 en tant que composants principaux.
